# EUROPÄISCHE PATENTANMELDUNG

(11) **EP 4 477 511 A1**
(43) Veröffentlichungstag der Anmeldung: **18.12.2024**
(21) Anmeldenummer: 23179652.5
(22) Anmeldetag: 16.06.2023
(51) Int. Cl.: B62J 11/00, B62J 50/21, F16M 11/04, F16M 13/02

(54) **HALTEVORRICHTUNG**

(71) Anmelder: SKS metaplast Scheffer-Klute GmbH, 59846 Sundern (DE)
(72) Erfinder: Kordes, Sven, 59846 Sundern (DE); Grabski, Karsten, 59469 Ense (DE); Nöcker, Alexander, 59846 Sundern (DE)
(74) Vertreter: Basfeld, Rainer

(57) **Zusammenfassung**

Die Erfindung betrifft eine Haltevorrichtung (1) für die Anbringung eines mobilen Endgeräts (200), wie beispielsweise eines Smartphones, an einem lenkergeführten Fahrzeug (100), wie einem Fahrrad. Die Haltevorrichtung (1) umfasst wenigstens eine Befestigungseinrichtung (2) zur Befestigung der Haltevorrichtung (1) an dem Fahrzeug (100) und wenigstens eine Verbindungseinrichtung (3) zur Verbindung des mobilen Endgeräts (200) an der Befestigungseinrichtung (2). Die Verbindungseinrichtung (3) weist wenigstens eine erste Adaptereinheit (4) mit radial zu einer Mittelachse (5) verschiebbaren Spannelementen (6) auf. Weiter betrifft die Erfindung ein lenkergeführtes Fahrzeug (100), insbesondere ein Fahrrad (100), mit einer solchen Haltevorrichtung (1).

## Beschreibung

Die vorliegende Erfindung betrifft eine Haltevorrichtung für die Anbringung eines mobilen Endgeräts, wie beispielsweise eines Smartphones, an einem lenkergeführten Fahrzeug, wie einem Fahrrad, mit einer Befestigungseinrichtung zur Befestigung der Haltevorrichtung an dem lenkergeführten Fahrzeug und einer Verbindungseinrichtung zur Verbindung des mobilen Endgeräts an der Befestigungseinrichtung.

Lenkergeführte Fahrzeuge, wie Fahrräder, E-Bikes, Quads, Jetskis, Mofas, Mopeds, Motorräder und dergleichen, werden mittels einer Lenkereinrichtung mit wenigstens einem Lenker geführt.

Hersteller von Haltevorrichtungen für lenkergeführte Fahrzeuge arbeiten mittlerweile direkt mit Fahrzeugherstellern zusammen, wie einem Fahrradhersteller, um Ihre Produkte noch besser auf einzelne Fahrzeugtypen und Anwendungsfälle, wie bei einem Rennrad oder einem Mountainbike, abzustimmen. Die Befestigungseinrichtung einer Haltevorrichtung wird durch die Fahrzeughersteller oft kostenlos verbaut, wenn Hersteller der Haltevorrichtung die Befestigungsvorrichtung auch kostenlos zur Verfügung stellt. Dadurch erhofft sich ein Hersteller der Haltevorrichtung eine höhere Wahrscheinlichkeit, dass der Fahrzeugkäufer die bereits teilweise vormontierte Haltevorrichtung nutzt und keine andere Haltevorrichtung für denselben Zweck hinzukauft. Für den Hersteller der Haltevorrichtung ist hierbei besonders wichtig, dass eine wirtschaftliche Belastung durch die kostenlose Bereitstellung der Befestigungseinrichtung klein bleibt.

Aus der DE 10 2017 128 167 A1 ist eine solche Haltevorrichtung für ein Fahrrad bekannt geworden. Zur Verbindung des mobilen Endgeräts wird ein Befestigungsteller mit nasenförmigen Vorsprüngen und einer induktiven Ladeinheit genutzt, welcher mit einem Aufnahmeraum, an dessen Ende ebenfalls Nasen ausgebildet sind, die in radialer Richtung in den Aufnahmeraum ragen, einen Bajonettverschluss bilden. Der Befestigungsteller weist einen Durchmesser von 40 mm und mehr auf.

Der große Durchmesser des Befestigungstellers hat sich in der Praxis als unkomfortabel herausgestellt, vor allem wenn die Halterung zwischen weiteren Anbauteilen wie Bremshebel und Klingel Platz finden muss. Außerdem hat der große Befestigungsteller einen erheblichen Einfluss auf ein Erscheinungsbild des Fahrrads. Weiter sind die Herstellungskosten für den großen Befestigungsteller mit dem Bajonettverschluss hoch. Insgesamt eignet sich die Haltevorrichtung daher nicht für eine kostenlose Bereitstellung durch den Hersteller der Haltevorrichtung und für den direkten Einbau durch einen Fahrzeughersteller.

Es ist daher die Aufgabe der vorliegenden Erfindung eine Haltevorrichtung für ein lenkergeführtes Fahrzeug zur Verfügung zu stellen, welche einen kleinen Bauraum aufweist und welche kostengünstig herstellbar ist.

Die Aufgabe wird gelöst durch eine Haltevorrichtung mit den Merkmalen nach Anspruch 1 und ein lenkergeführtes Fahrzeug mit den Merkmalen nach Anspruch 15. Bevorzugte Weiterbildungen sind Gegenstand der Unteransprüche. Weitere Merkmale und Vorteile sind Bestandteil der allgemeinen Beschreibung und der Beschreibung des Ausführungsbeispiels.

Die erfindungsgemäße Haltevorrichtung für die Anbringung eines mobilen Endgeräts, wie beispielsweise eines Smartphones, an einem lenkergeführten Fahrzeug, wie einem Fahrrad oder dergleichen, umfasst wenigstens eine Befestigungseinrichtung zur Befestigung der Haltevorrichtung an dem Fahrzeug und wenigstens eine Verbindungseinrichtung zur Verbindung des mobilen Endgeräts an der Befestigungseinrichtung. Die Verbindungseinrichtung weist wenigstens eine erste Adaptereinheit mit in radialer Richtung zu einer Mittelachse verschiebbaren Spannelementen auf.

Die Erfindung hat viele Vorteile. Ein erheblicher Vorteil der Erfindung ist, dass durch die Spannelemente eine Verbindung zwischen dem lenkergeführten Fahrzeug und einem mobilen Endgerät bei kleinem maximalen Außendurchmesser beziehungsweise Bauraum der Haltevorrichtung realisierbar ist. Gleichzeitig ist durch die in radialer Richtung verschiebbaren Spannelemente eine breite Stützbasis gegeben, was eine sichere und belastbare Verbindung zur Verfügung ermöglicht. Darüber hinaus sind die in radialer Richtung verschiebbaren Spannelemente kostengünstig realisierbar, sodass die Haltevorrichtung auch geeignet ist, um durch einen Fahrzeughersteller, wie einen Fahrradhersteller, direkt bei der Fahrzeugmontage mit verbaut zu werden.

Bevorzugt weist die erste Adaptereinheit eine kleine maximale Längenausdehnung im Wesentlichen quer zur Mittelachse und insbesondere einen kleinen maximalen Außendurchmesser beziehungsweise einen kleinen maximalen Abstand auf. Nachfolgend wird exemplarisch der maximale Außendurchmesser genutzt, wobei der Begriff in der gesamten Anmeldung durch die Begriffe maximale Längenausdehnung quer zur Mittelachse und/oder maximaler Abstand austauschbar ist. Vorteilhaft weist die erste Adaptereinheit einen maximalen Außendurchmesser von weniger als 50 mm, bevorzugt weniger als 40 mm und besonders bevorzugt weniger als 30 mm auf. Vorzugsweise weist die Befestigungseinrichtung der Haltevorrichtung an dem Fahrzeug einen maximalen Außendurchmesser von weniger als 50 mm, bevorzugt weniger als 40 mm und besonders bevorzugt weniger als 30 mm auf. Vorteilhaft können die erste Adaptereinheit und die Befestigungseinrichtung an verschiedensten Stellen am Fahrzeug montiert werden, insbesondere ohne das diese optisch besonders hervortreten, wie z. B. an einer Lenkereinrichtung. Dabei kann die Haltevorrichtung im Durchmesser insbesondere so klein ausgestaltet werden, dass der Durchmesser der Befestigungseinrichtung an dem Fahrzeug in etwa einem Durchmesser einer Lenkstange oder einer Aufnahme an der Lenkstange eines Lenkervorbaus entspricht. Darüber hinaus kann der maximale Außendurchmesser auch noch kleiner sein.

Besonders bevorzugt ist die Befestigungseinrichtung an dem Fahrzeug an einem Lenkervorbau als Bestandteil einer Lenkereinrichtung eines Fahrzeugs montierbar und/oder montiert. Vorteilhaft eignet sich die Variante, bei welcher die Befestigungseinrichtung an dem Fahrrad inklusive der ersten Adaptereinheit der Befestigungseinrichtung an dem mobilen Endgerät, um direkt durch den Fahrzeughersteller montiert zu werden, da die Montage hier durch eine einfache Schraubverbindung erfolgen kann. Vorteilhaft bleibt ein Lenker für andere oder weitere, insbesondere andere, Haltevorrichtungen frei

Vorteilhaft kann die Befestigungseinrichtung an dem Fahrzeug direkt an einer Lenkstange, einem Lenker oder auch an einem anderen Teil der Lenkereinrichtung aufgenommen und insbesondere verschraubt werden. Zweckmäßig weist die Befestigungseinrichtung der Haltevorrichtung an dem Fahrzeug eine Schraubeneinheit, mit wenigstens einer Schraube auf. Vorzugsweise umfasst die Lenkereinrichtung wenigstens auch eine Lenkergabel und/oder eine Lenkstange und/oder einen Lenker. Insbesondere kann die Befestigungseinrichtung der Haltevorrichtung an dem Fahrzeug alternativ oder zusätzlich wenigstens zwei miteinander verbindbare Teile aufweisen, die zusammen einen Lenker eines Zweirades umgreifen können und bei Verbindung miteinander die Befestigungseinrichtung der Haltevorrichtung an dem Zweirad festlegen.

Vorzugsweise sind wenigstens zwei Spannelemente in entgegengesetzte Richtungen, insbesondere radial nach außen, verschiebbar. Insbesondere kann durch eine Verschiebung der Spannelemente eine formschlüssige Verbindung erzeugt werden. Vorteilhaft kann dadurch eine gleichmäßige Kraftübertragung in verschiedene Richtungen erfolgen. Weiter vorteilhaft ist die durch Verschiebung der Spannelemente hergestellte Verbindung kippsicher.

Insbesondere sind die Spannelemente jeweils durch Verdrehung um die Mittelachse in radialer Richtung verschiebbar. Vorzugsweise sind die Spannelemente hierfür verschiebbar auf einer Exzenterkurve gelagert. Vorteilhaft führt eine Verdrehung der Spannelemente um die Mittelachse entlang einer Kontur der Exzenterkurve zu einer Verschiebung der Spannelemente in radialer Richtung um die Mittelachse.

Zweckmäßig weist das Spannelement eine Kontur mit zwei Nasen und einer Einbuchtung auf. Insbesondere ist als Gegenkontur ein Steg zwischen zwei benachbarten Öffnungen ausgebildet, in welche die Einbuchtung eingreift. Vorteilhaft kann durch diese zusätzliche Fixierung eine Kraftübertragung zwischen den Spannelementen und den Öffnungen verbessert werden, sodass eine besonders große Fläche für eine Kraftübertragung zur Verfügung steht.

Vorzugsweise werden die Spannelemente durch ein Rückstellelement vorbelastet, insbesondere in eine entriegelte Position. Vorteilhaft ist das Rückstellelement als Gummiband ausgebildet, welches die Spannelemente gegen die Kontur der Exzenterkurve drückt. Weiter kann das Rückstellelement alternativ oder zusätzlich auch ein weiteres Federelement oder dergleichen umfassen.

Insbesondere ist wenigstens eine zweite Adaptereinheit umfasst, welche an der ersten Adaptereinheit aufnehmbar ist. Vorzugsweise weist die erste Adaptereinheit eine Kontur auf, welche formschlüssig an einer Kontur der zweiten Adaptereinheit aufnehmbar und insbesondere aufsteckbar ist. Insbesondere weisen die Adaptereinheiten hierzu korrespondierende Formelemente auf, sodass diese im nicht verbundenen Zustand formschlüssig aneinander oder auch ineinander positionierbar sind. Vorzugsweise können durch die formschlüssigen Konturen Kräfte direkt zwischen der ersten Adaptereinheit und der zweiten Adaptereinheit übertragen werden.

Zweckmäßig weist die zweite Adaptereinheit Öffnungen auf, in welche die Spannelemente eingreifen können. Insbesondere sind die Spannelemente in die Öffnungen einschiebbar, sodass eine formschlüssige Verbindung vorliegt.

Bevorzugt sind die Spannelemente gegen die Öffnungen verspannbar. Vorteilhaft kann hierdurch ein fester und spielfreier Halt der Spannelemente in den Öffnungen erreicht werden, sodass besonders hohe Kräfte ohne Relativbewegungen übertragbar sind. Vorteilhaft weisen die Spannelemente eine Höhe, welche größer ist als eine Höhe der Öffnungen, in Verbindung mit einem keilförmigen Abschnitt auf, welcher sich beim Einschieben in die Öffnungen gegen eine Kontur der Öffnung verspannt. Bevorzugt sind die Öffnungen und/oder die Spannelemente hierfür wenigstens teilweise elastisch, z. B. aus einem Kunststoff oder einem anderen elastischen Material ausgebildet.

Besonders bevorzugt weist die zweite Adaptereinheit mehrere separate Öffnungen und insbesondere Paare an Öffnungen, auf, welche so angeordnet sind, dass die zweite Adaptereinheit, und insbesondere das mobile Endgerät, relativ zu der ersten Adaptereinheit in zwei verschiedenen Stellungen verriegelt werden kann, wobei die beiden Stellungen insbesondere einen Winkel von 90° miteinander einschließen. Vorteilhaft kann die zweite Adaptereinheit dadurch in verschiedenen Winkelstellungen zu der ersten Adaptereinheit an der ersten Adaptereinheit aufgenommen werden. Vorteilhat kann dadurch auch ein mit der zweiten Adaptereinheit in Verbindung stehendes mobiles Endgerät in verschiedenen Stellungen aufgenommen werden, z. B. hochkant oder quer.

Zweckmäßig umfasst die Verbindungseinrichtung eine Aufnahmeschale für das mobile Endgerät. Insbesondere ist die Aufnahmeschale an der zweiten Adaptereinheit ausgebildet und/oder aufgenommen.

Insbesondere ist eine Kommunikationseinheit wie ein NFC-Chip umfasst. Vorteilhaft ermöglicht die Kommunikationseinheit eine insbesondere drahtlose Übertragung von Informationen und Daten zwischen dem Fahrzeug und dem mobilen Endgerät. Vorteilhaft können so, insbesondere kontaktlos, beispielsweise Informationen, wie aktuelle Sensordaten, aufgenommen und durch das mobile Endgerät ausgewertet werden.

Bevorzugt umfasst die Haltvorrichtung wenigstens eine Zwischenspeichereinheit für elektrische Energie. Insbesondere kann die Zwischenspeichereinheit zwischen der ersten Adaptereinheit und der zweiten Adaptereinheit zwischengeschaltet werden. Hierzu weist die Zwischenspeichereinheit vorzugsweise ebenfalls Adaptereinheiten auf, welche in die erste Adaptereinheit und die zweite Adaptereinheit eingreifen können. Die Zwischenspeichereinheit kann so ausgebildet sein, dass es Verbindungselemente für die Verbindung mit fahrzeugseitigen Stromquellen aufweist, wobei die Zwischenspeichereinheit insbesondere so ausgebildet ist, dass sie von fahrzeugseitigen Stromquellen, beispielsweise von einem Dynamo oder einer Batterie eines E-Bikes, aufgeladen werden kann. Weiter kann die Zwischenspeichereinheit Verbindungselemente für die Verbindung mit externen Stromquellen aufweisen, wobei die Zwischenspeichereinheit insbesondere so ausgebildet sind, dass sie von externen Stromquellen, beispielsweise über eine USB-Schnittstelle, aufgeladen werden können. Insbesondere sind ein oder mehrere Zwischenspeichereinheiten in einem separaten Gehäuse untergebracht, sodass es insbesondere von der Befestigungseinrichtung getrennt werden kann.

Ein erfindungsgemäßes lenkergeführtes Fahrzeug, welches insbesondere als Fahrrad ausgebildet ist, umfasst wenigstens eine zuvor beschriebene Haltevorrichtung. Vorteilhafte Weiterbildungen ergeben sich aus der gesamten Anmeldung. Insbesondere ist die Haltevorrichtung wenigstens teilweise an einem Lenkervorbau einer Lenkereinrichtung montiert. Vorteilhaft ist die Haltevorrichtung kostengünstig herstellbar und kleinbauend. Dadurch ist die Haltevorrichtung auch dazu geeignet direkt durch den Hersteller der Haltevorrichtung zur Montage durch einen Fahrzeughersteller bereitgestellt zu werden.

Weitere Merkmale und Vorteile des Ausführungsbeispiels der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1a-c: schematische perspektivische Ansichten einer an einem Lenkervorbau aufgenommenen erfindungsgemäßen Haltevorrichtung zur Montage in einer ersten Stellung;
- Fig. 2a-c: schematische Seitenansichten der an dem Lenkervorbau aufgenommenen Haltevorrichtung zur Montage in der ersten Stellung;
- Fig. 3a-c: schematische perspektivische Ansichten der an dem Lenkervorbau aufgenommenen Haltevorrichtung zur Montage in einer zweiten Stellung;
- Fig. 4a-c: schematische Seitenansichten der an einem Lenkervorbau aufgenommenen Haltevorrichtung zur Montage in der zweiten Stellung;
- Fig. 5a-b: schematische Detailansichten der an den Lenkervorbau aufgenommenen Haltevorrichtung in nicht verriegelter Position;
- Fig.6a-b: schematische Detailansichten der an einem Lenkervorbau aufgenommenen Haltevorrichtung in verriegelter Position;
- Fig. 7a-b: schematische Detailansichten der erfindungsgemäßen Haltevorrichtung, wobei an einer ersten Adaptereinheit eine zweite Adaptereinheit formschlüssig aufgenommen ist in einer entriegelten Position.
- Fig. 8a-b: schematische Detailansichten der Haltevorrichtung, wobei an der ersten Adaptereinheit die zweite Adaptereinheit in einer verriegelten Position aufgenommen ist.
- Fig. 9: eine schematische Seitenansicht der an einem Lenkervorbau aufgenommenen Haltevorrichtung mit einer Zwischenspeichereinheit.

Es ist nicht notwendig, dass eine erfindungsgemäße Haltevorrichtung alle nachfolgend beschriebenen Merkmale aufweist. Es ist auch möglich, dass eine erfindungsgemäße Haltevorrichtung nur einzelne Merkmale des nachfolgend beschriebenen Ausführungsbeispiels aufweist.

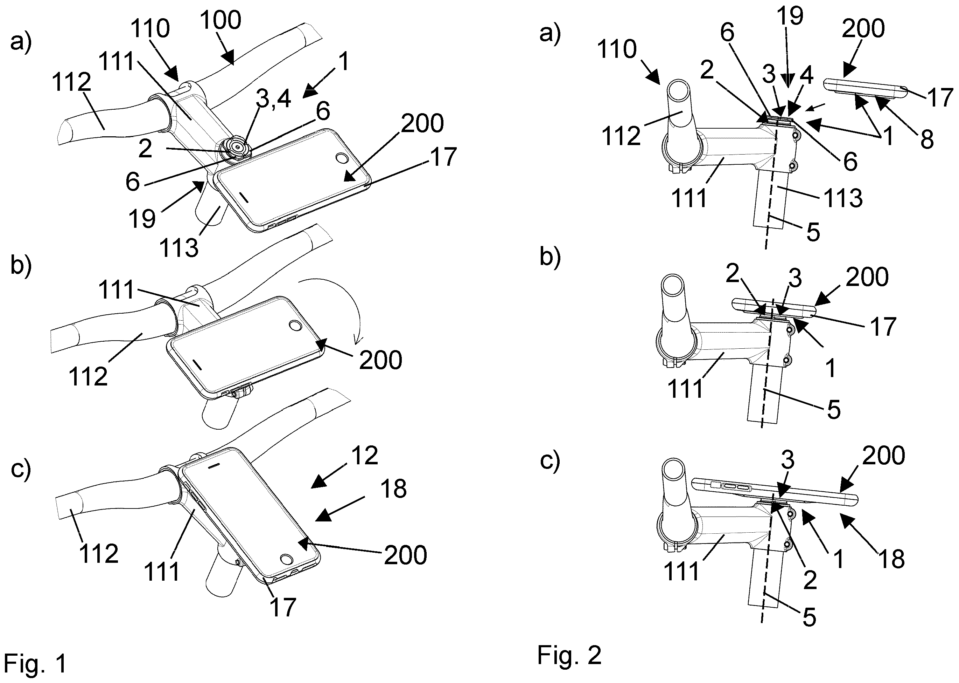

Fig. 1a-c zeigen schematische perspektivische Ansichten einer erfindungsgemäßen Haltevorrichtung 1, welche an einem als Lenkervorbau 111 einer Lenkeinrichtung 110 mit Lenker 112 eines lenkergeführten Fahrzeugs 100 aufgenommenen ist. Die Haltevorrichtung 1 umfasst eine Befestigungseinrichtung 2 zur Befestigung der Haltevorrichtung 1 an dem Fahrzeug 100 und eine Verbindungseinrichtung 3 zur Verbindung eines mobilen Endgeräts 200 an der Befestigungseinrichtung 2. Die Verbindungseinrichtung 3 umfasst hier eine erste Adaptereinheit 4 und eine zweite Adaptereinheit 8. Die zweite Adaptereinheit 8 ist hier in Fig. 1a zur Montage in einer ersten Stellung 12 angeordnet, siehe Fig. 1c.

Die Befestigungseinrichtung 2 ist hier an dem Lenkervorbau 111 beziehungsweise an der Lenkstange 113 aufgenommen und mit einer Schraube verschraubt beziehungsweise verbunden. Die erste Adaptereinheit 4 der Verbindungseinrichtung 2 weist hier in radialer Richtung zu einer Mittelachse 5 verschiebbare Spannelemente 6 auf.

An der zweiten Adaptereinheit 8 der Verbindungseinrichtung 3 ist hier eine Aufnahmeschale 17 zur Aufnahme des mobilen Endgeräts 200 ausgebildet. In der Aufnahmeschale 17 ist hier ein Smartphone 200 als mobiles Endgerät 200 aufgenommen.

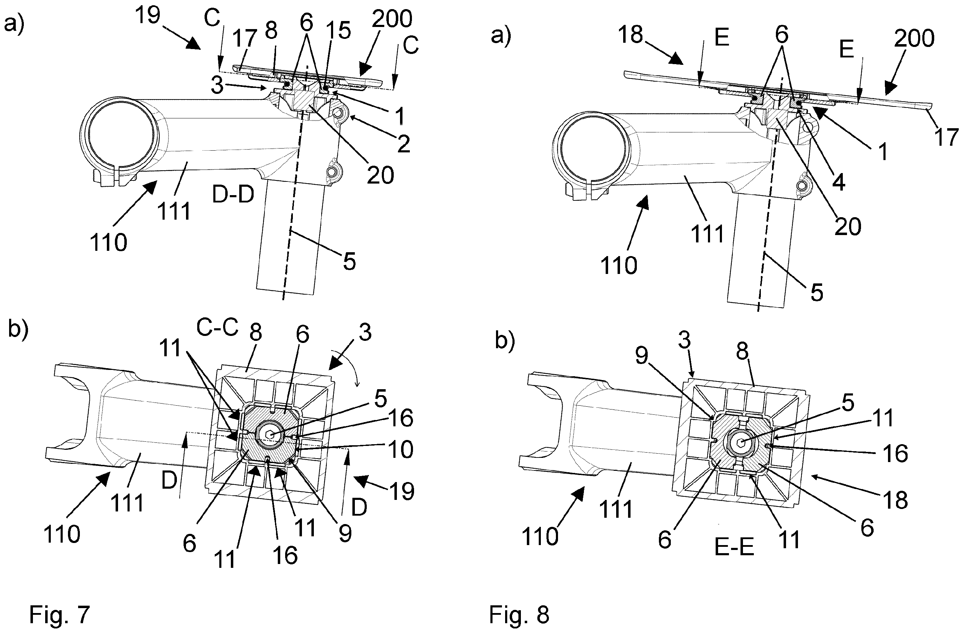

Zur Verbindung der zweiten Adaptereinheit 8 an der ersten Adaptereinheit 4, wird die zweite Adaptereinheit 8 zunächst auf die erste Adaptereinheit 4 aufgesteckt, sodass die Konturen der ersten Adaptereinheit 4 und der hier nicht dargestellten zweiten Adaptereinheit 8 formschlüssig ineinandergreifen, vgl. Fig. 7a-b und Fig. 8a-b. Die Spannelemente 6 befinden sich dabei in einer entriegelten Position 19. Anschließend wird die zweite Adaptereinheit 8 mit dem mobilen Endgerät 200 zusammen um die Mittelachse 5 gedreht, Fig. 1b. Durch die Drehung der Spannelemente 6 um die Mittelachse 5 werden die Spannelemente 6 gleichzeitig in radialer Richtung nach außen zur Mittelachse 5 verschoben. Bei einer Drehung um 90° liegt die verriegelte Position 18 vor, Fig. 1c, in welcher das Endgerät 200 fest an dem lenkergeführten Fahrzeug 100 aufgenommen ist. Dabei befindet sich das Endgerät 200 hier in einer ersten möglichen Stellung 12.

Fig. 2a-c zeigen schematische Seitenansichten der an einem Lenkervorbau 111 aufgenommenen erfindungsgemäßen Haltevorrichtung 1 zur Montage in der ersten Stellung 12. Zur Verbindung wird die zweite Adaptereinheit 8 auf die erste Adaptereinheit 4 aufgesteckt, Fig. 2a und Fig. 2b, und durch Verdrehen um 90° werden die Adaptereinheiten 3, 8 zueinander verriegelt, sodass das mobile Endgerät 200 fest an dem Lenkervorbau 111 der Lenkereinrichtung 110 des Fahrzeugs 100 verbunden ist.

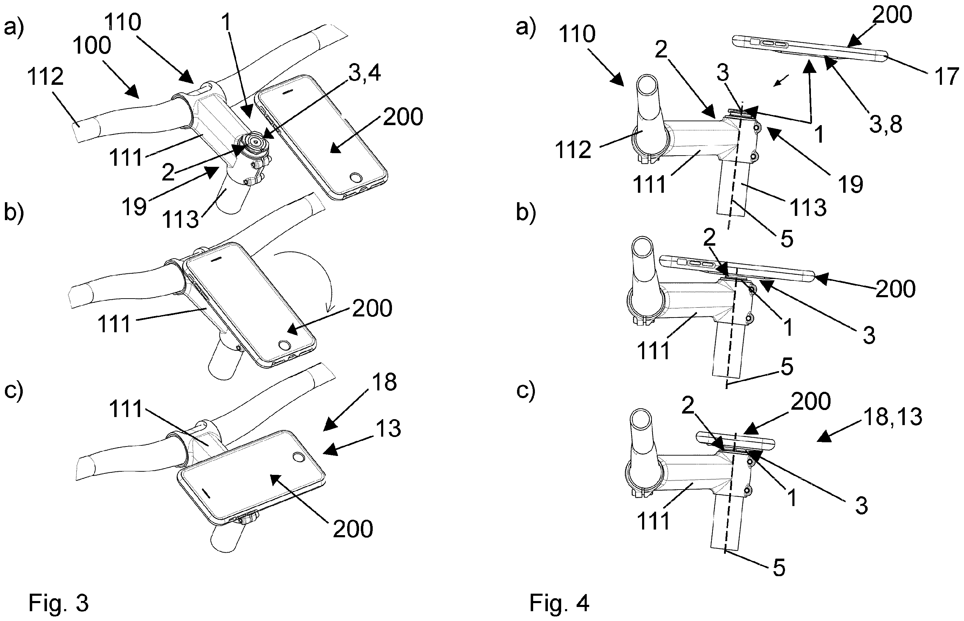

Fig. 3a-c zeigen schematische perspektivische Ansichten der an dem Lenkervorbau 111 aufgenommenen erfindungsgemäßen Haltevorrichtung 1 zur Montage in einer zweiten Stellung 13. Das mobile Endgerät 200 wird hier in einer zu Fig. 1a, um 90° verdrehten Stellung in entriegelter Position 19 aufgenommen und auch in einer um 90° verdrehten Stellung 18 verriegelt, vgl. Fig. 1c.

Fig. 4a-c zeigen schematische Seitenansichten der am Lenkervorbau 111 aufgenommenen erfindungsgemäßen Haltevorrichtung 1 zur Montage in der zweiten Stellung 13.

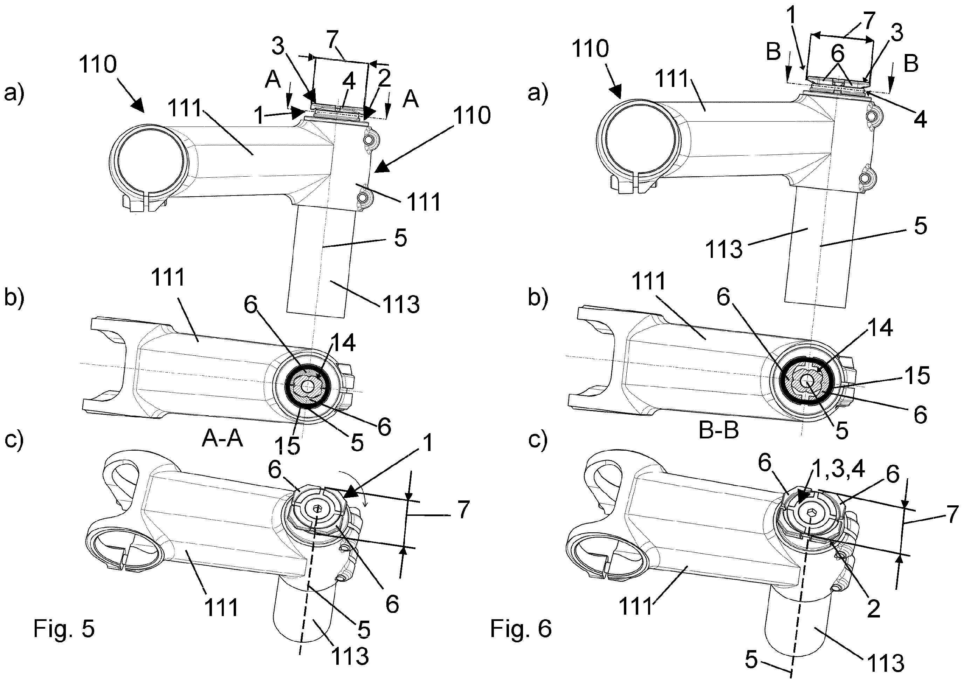

Fig. 5a-c zeigen schematische Detailansichten der an dem Lenkervorbau 111 aufgenommenen erfindungsgemäßen Haltevorrichtung 1 in nicht verriegelter Position 19. Ein maximaler Außendurchmesser 7 der ersten Adaptereinheit 4 und der Befestigungseinrichtung 2 beträgt hier weniger als 30 mm, sodass weder die erste Adaptereinheit 4 noch die Befestigungseinrichtung 2 über die Außenmaße des Lenkervorbaus 111 im vorliegenden Ausführungsbeispiels übersteht, siehe Fig. 5a und Fig. 5c. Die Haltevorrichtung 1 fügt sich dadurch unauffällig in die Struktur des Lenkervorbaus 111 ein. Dadurch eignet sich die Haltevorrichtung 1 auch vor allem dazu, bereits durch einen Fahrzeughersteller, wie einen Fahrradhersteller, direkt bei der Montage des Fahrzeugs mit montiert zu werden.

Fig. 6b zeigt eine Schnittansicht durch die erste Adaptereinheit 4. Die Spannelemente 6 sind hier symmetrisch um die Mittelachse 5 angeordnet und auf einer Exzenterkurve 14 gelagert. Die Spannelemente 6 werden durch das Rückstellelement 15, welches hier als elastisches Band 15 ausgebildet ist gegen die Exzenterkurve 14 gedrückt und dadurch in Richtung der entriegelten Position 19 vorbelastet.

Fig. 6a-c zeigen schematische Detailansichten der an dem Lenkervorbau 11 aufgenommenen erfindungsgemäßen Haltevorrichtung 1 in verriegelter Position 18. Hier sind die Spannelemente 6 der ersten Adaptereinheit 4 in radialer Richtung nach außen verschoben, vgl. Fig. 5b und 6b. Dies erfolgt durch Verdrehung der Spannelemente 6 um die Mittelachse 5 und entlang der Exzenterkurve 14 hier um 90°. Durch die Verdrehung gleiten die Spannelemente 6 auf einer Kontur der Exzenterkurve 14 ab. Ein Radius der Kontur der Exzenterkurve 14 vergrößert mit der Verdrehung aus der entriegelten Position sich, sodass die Spannelemente 6 radial nach außen verschoben werden in eine verriegelte Position 18.

Fig. 7a-b zeigen schematische Detailansichten der erfindungsgemäßen Haltevorrichtung 1, wobei an der ersten Adaptereinheit 4 die zweite Adaptereinheit 8 formschlüssig aufgenommen ist und wobei sich die Spannelemente 6 in einer entriegelten Position 19 befinden. Die Kontur 9 der ersten Adaptereinheit 4 und die Kontur 10 der zweiten Adaptereinheit 8 greifen formschlüssig ineinander, sodass die Spannelemente 6 mitbewegt werden, wenn das an der zweiten Adaptereinheit 8 aufgenommene mobile Endgerät 200 um die Mittelachse 6 verdreht wird, siehe Fig. 7b. Die Spannelemente 6 werden durch die Drehung in radialer Richtung nach außen verschoben und greifen dann in die Öffnungen 11 ein. Die zweite Adaptereinheit 8 weist hier mehrere Paare an Öffnungen 11 auf, welche im 90° zueinander versetzt sind. Dadurch kann die zweite Adaptereinheit 8 in zwei verschiedenen Stellungen 12, 13 an der ersten Adaptereinheit 4 aufgenommen werden. Hier weist die Haltevorrichtung 1 zusätzlich eine Kommunikationseinheit 20 auf, welches als NFC-Chip 20 ausgebildet ist. Dadurch können drahtlos Informationen zwischen dem mobilen Endgerät 200 und dem Fahrzeug 100 übertragen werden.

Fig. 8a-b zeigen schematische Detailansichten der erfindungsgemäßen Haltevorrichtung 1, wobei an der ersten Adaptereinheit 4 die zweite Adaptereinheit 8 formschlüssig aufgenommen ist in einer verriegelten Position 18. Die Spannelemente 6 der ersten Adaptereinheit 4 sind nach außen verschoben und greifen hier in die Öffnungen 10 der zweiten Adaptereinheit 8 ein. Die Spannelemente 6 weisen hier einen keilförmigen Abschnitt auf, sodass sich die Spannelemente 6 in den Öffnungen 11 verspannen. Dadurch liegt hier eine spielfreie formflüssige Verbindung vor.

Zur Verbesserung des Halts weisen die Spannelemente 6 Einbuchtungen 16 auf, welche Stege zwischen den Öffnungen 11 umschließen, sodass besonders hohe Kräfte übertragbar sind.

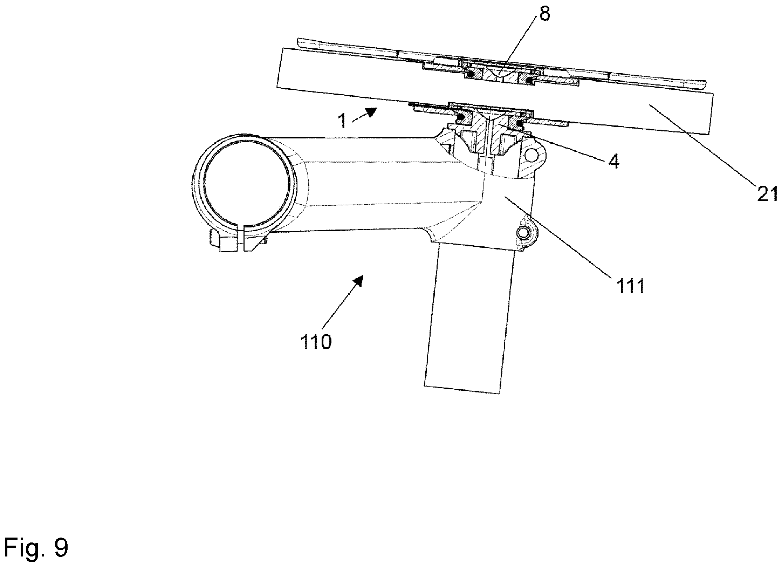

Fig. 9 zeigt eine schematische Seitenansicht der an dem Lenkervorbau 111 aufgenommenen erfindungsgemäßen Haltevorrichtung 1 mit einer Zwischenspeichereinheit 21. Die Zwischenspeichereinheit 21 ist hier an der ersten Adaptereinheit 4 aufgenommen. Die zweite Adaptereinheit 8 ist an der gegenüberliegenden Seite der Zwischenspeichereinheit 21 aufgenommen. Hierzu weist die Zwischenspeichereinheit 21 entsprechende dritte und vierte Adaptereinheiten auf, die hier nicht im Detail dargestellt sind. Durch die Zwischenspeichereinheit 21 kann das mobile Endgerät 200 beispielswiese mit zusätzlicher elektrischer Energie versorgt werden, um eine Nutzungsdauer zu verlängern.

### Bezugszeichenliste:

- 1: Haltevorrichtung
- 2: Befestigungseinrichtung
- 3: Verbindungseinrichtung
- 4: erste Adaptereinheit
- 5: Mittelachse
- 6: Spannelement
- 7: maximaler Außendurchmesser
- 8: zweite Adaptereinheit
- 9: Kontur der ersten Adaptereinheit
- 10: Kontur der zweiten Adaptereinheit
- 11: Öffnungen an der zweiten Adaptereinheit
- 12: Erste Stellung
- 13: Zweite Stellung
- 14: Exzenterkurve
- 15: Rückstellelement
- 16: Einbuchtung
- 17: Aufnahmeschale
- 18: Verriegelte Position
- 19: Entriegelte Position
- 20: Kommunikationseinheit, NFC-Chip
- 21: Zwischenspeichereinheit
- 100: Lenkergeführtes Fahrzeug
- 110: Lenkereinrichtung
- 111: Lenkervorbau
- 112: Lenker
- 113: Lenkstange
- 200: mobiles Endgerät

## Patentansprüche

1. Haltevorrichtung (1) für die Anbringung eines mobilen Endgeräts (200), wie beispielsweise eines Smartphones (200), an einem lenkergeführten Fahrzeug (100), wie einem Fahrrad, umfassend
- wenigstens eine Befestigungseinrichtung (2) zur Befestigung der Haltevorrichtung (1) an dem Fahrzeug (100); und
- wenigstens ein Verbindungseinrichtung (3) zur Verbindung des mobilen Endgeräts (200) mit der Befestigungseinrichtung (2);
**dadurch gekennzeichnet, dass**
die Verbindungseinrichtung (2) wenigstens eine erste Adaptereinheit (4) mit in radialer Richtung zu einer Mittelachse (5) verschiebbaren Spannelementen (6) aufweist.

2. Haltervorrichtung (1) nach einem der vorhergehenden Ansprüche, wobei die Spannelemente (6) jeweils um die Mittelachse (5) verdrehbar sind und wobei eine Verdrehung der Spannelemente (6) um die Mittelachse (5) zu der Verschiebung in radialer Richtung führt.

3. Haltevorrichtung (1) nach einem der vorhergehenden Ansprüche, wobei wenigstens zwei Spannelemente (6) in entgegengesetzte Richtungen verschiebbar sind.

4. Haltevorrichtung (1) nach einem der vorhergehenden Ansprüche, wobei die Spannelemente (6) durch wenigstens ein Rückstellelement (15) vorbelastet werden, insbesondere in eine entriegelte Position (19).

5. Haltevorrichtung (1) nach Anspruch 1, wobei die erste Adaptereinheit (4) und/oder die Befestigungseinrichtung (2) jeweils einen Außendurchmesser (7) von weniger als 50 mm und bevorzugt weniger 40 mm und besonders bevorzugt weniger als 30 mm aufweisen.

6. Haltevorrichtung (1) nach einem der vorhergehenden Ansprüche, wobei die Verbindungseinrichtung (2) eine zweite Adaptereinheit (8) umfasst, welche an der ersten Adaptereinheit (4) aufnehmbar ist.

7. Haltevorrichtung (1) nach dem vorhergehenden Anspruch, wobei die erste Adaptereinheit (4), und insbesondere die Spannelemente (6), eine Kontur (9) aufweisen, welche formschlüssig an einer Kontur (10) der zweiten Adaptereinheit (8) aufnehmbar ist.

8. Haltevorrichtung (1) nach dem vorhergehenden Anspruch, wobei die Spannelemente (6) jeweils um die Mittelachse (5) verdrehbar sind und wobei eine Verdrehung der Spannelemente (6) um die Mittelachse (5) zu einer Verschiebung der Spannelemente (6) in radialer Richtung führt und wobei die Spannelemente (6) durch eine Verdrehung der zweiten Adaptereinheit (8) verdrehbar sind.

9. Haltevorrichtung (1) nach einem der drei vorhergehenden Ansprüche, wobei an der zweiten Adaptereinheit (8) eine Aufnahmeschale (17) für das mobile Endgerät (200) ausgebildet ist.

10. Haltevorrichtung (1) nach einem der vier vorhergehenden Ansprüche, wobei die zweite Adaptereinheit (8) Öffnungen (11) aufweist, in welche die Spannelemente (6) eingreifen können.

11. Haltevorrichtung (1) nach dem vorhergehenden Anspruch, wobei die Spannelemente (6) sich gegen die Öffnungen (11) verspannen.

12. Haltevorrichtung (1) nach einem der beiden vorhergehenden Ansprüche, wobei die zweite Adaptereinheit (8) mehrere separate Paare an Öffnungen (11) aufweist, welche so angeordnet sind, dass die zweite Adaptereinheit (8), und insbesondere das mobile Endgerät (200), relativ zu der ersten Adaptereinheit (6) in zwei verschiedenen Stellungen (12, 13) verriegelt werden kann, wobei die beiden Stellungen (12, 13) insbesondere einen Winkel von 90° miteinander einschließen.

13. Haltevorrichtung (1) nach einem der vorhergehenden Ansprüche, umfassend eine Zwischenspeichereinheit (21) für elektrische Energie.

14. Lenkergeführtes Fahrzeug (100), welches insbesondere als Fahrrad ausgebildet ist, umfassend eine Haltevorrichtung (1) nach einem der vorhergehenden Ansprüche.

15. Lenkergeführtes Fahrzeug, nach dem vorhergehenden Anspruch, wobei die Haltevorrichtung (1) wenigstens teilweise an einem Lenkervorbau (111) einer Lenkereinrichtung (110) montiert ist.

## Geänderte Patentansprüche

### Geänderte Patentansprüche gemäss Regel 137(2) EPÜ.

1. Haltevorrichtung (1) für die Anbringung eines mobilen Endgeräts (200), wie beispielsweise eines Smartphones (200), an einem lenkergeführten Fahrzeug (100), wie einem Fahrrad, umfassend
- wenigstens eine Befestigungseinrichtung (2) zur Befestigung der Haltevorrichtung (1) an dem Fahrzeug (100); und
- wenigstens ein Verbindungseinrichtung (3) zur Verbindung des mobilen Endgeräts (200) mit der Befestigungseinrichtung (2);
**dadurch gekennzeichnet, dass**
die Verbindungseinrichtung (2) wenigstens eine erste Adaptereinheit (4) mit in radialer Richtung zu einer Mittelachse (5) verschiebbaren Spannelementen (6) aufweist, und wobei die Spannelemente (6) jeweils um die Mittelachse (5) verdrehbar sind und wobei eine Verdrehung der Spannelemente (6) um die Mittelachse (5) zu der Verschiebung in radialer Richtung führt.

2. Haltevorrichtung (1) nach einem der vorhergehenden Ansprüche, wobei wenigstens zwei Spannelemente (6) in entgegengesetzte Richtungen verschiebbar sind.

3. Haltevorrichtung (1) nach einem der vorhergehenden Ansprüche, wobei die Spannelemente (6) durch wenigstens ein Rückstellelement (15) vorbelastet werden, insbesondere in eine entriegelte Position (19).

4. Haltevorrichtung (1) nach Anspruch 1, wobei die erste Adaptereinheit (4) und/oder die Befestigungseinrichtung (2) jeweils einen Außendurchmesser (7) von weniger als 50 mm und bevorzugt weniger 40 mm und besonders bevorzugt weniger als 30 mm aufweisen.

5. Haltevorrichtung (1) nach einem der vorhergehenden Ansprüche, wobei die Verbindungseinrichtung (2) eine zweite Adaptereinheit (8) umfasst, welche an der ersten Adaptereinheit (4) aufnehmbar ist.

6. Haltevorrichtung (1) nach dem vorhergehenden Anspruch, wobei die erste Adaptereinheit (4), und insbesondere die Spannelemente (6), eine Kontur (9) aufweisen, welche formschlüssig an einer Kontur (10) der zweiten Adaptereinheit (8) aufnehmbar ist.

7. Haltevorrichtung (1) nach dem vorhergehenden Anspruch, wobei die Spannelemente (6) jeweils um die Mittelachse (5) verdrehbar sind und wobei eine Verdrehung der Spannelemente (6) um die Mittelachse (5) zu einer Verschiebung der Spannelemente (6) in radialer Richtung führt und wobei die Spannelemente (6) durch eine Verdrehung der zweiten Adaptereinheit (8) verdrehbar sind.

8. Haltevorrichtung (1) nach einem der drei vorhergehenden Ansprüche, wobei an der zweiten Adaptereinheit (8) eine Aufnahmeschale (17) für das mobile Endgerät (200) ausgebildet ist.

9. Haltevorrichtung (1) nach einem der vier vorhergehenden Ansprüche, wobei die zweite Adaptereinheit (8) Öffnungen (11) aufweist, in welche die Spannelemente (6) eingreifen können.

10. Haltevorrichtung (1) nach dem vorhergehenden Anspruch, wobei die Spannelemente (6) sich gegen die Öffnungen (11) verspannen.

11. Haltevorrichtung (1) nach einem der beiden vorhergehenden Ansprüche, wobei die zweite Adaptereinheit (8) mehrere separate Paare an Öffnungen (11) aufweist, welche so angeordnet sind, dass die zweite Adaptereinheit (8), und insbesondere das mobile Endgerät (200), relativ zu der ersten Adaptereinheit (6) in zwei verschiedenen Stellungen (12, 13) verriegelt werden kann, wobei die beiden Stellungen (12, 13) insbesondere einen Winkel von 90° miteinander einschließen.

12. Haltevorrichtung (1) nach einem der vorhergehenden Ansprüche, umfassend eine Zwischenspeichereinheit (21) für elektrische Energie.

13. Lenkergeführtes Fahrzeug (100), welches insbesondere als Fahrrad ausgebildet ist, umfassend eine Haltevorrichtung (1) nach einem der vorhergehenden Ansprüche.

14. Lenkergeführtes Fahrzeug, nach dem vorhergehenden Anspruch, wobei die Haltevorrichtung (1) wenigstens teilweise an einem Lenkervorbau (111) einer Lenkereinrichtung (110) montiert ist.
